# EUROPÄISCHE PATENTSCHRIFT

(11) **EP 1 225 347 B1**
(45) Veröffentlichungstag und Bekanntmachung des Hinweises auf die Patenterteilung: **17.12.2003**
(21) Anmeldenummer: 02000491.7
(22) Anmeldetag: 09.01.2002
(51) Int. Cl.: F16B 37/04, F16B 7/18

(54) **Klemmelement und Vorrichtung zum Festlegen von Nockenschienen**
Fastening element and fastening device for profiles
Elément de fixation et dispositiv de fixation pour profilés

(30) Priorität: 20.01.2001 DE 10102528
(43) Veröffentlichungstag der Anmeldung: 24.07.2002
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost, Dipl.-Phys. Dr. rer.nat.

(56) Entgegenhaltungen:
- EP-A- 0 343 942
- DE-A- 4 108 175
- US-A- 5 116 161
- US-A- 5 839 787

## Beschreibung

Die Erfindung betrifft ein Klemmelement nach dem Anspruch 1 und eine Vorrichtung mit einem solchen Klemmelement nach dem Anspruch 5.

Aus der DE 41 08 175 A1 ist ein Klemmelement mit einem parallelogrammartigen Nütenstein bekannt, der zum Verklemmen in einer mit nach innen gerichteten Stegen versehenen Halteschiene keilförmige Schlitze aufweist. Die bekannte Vorrichtung dient zum Überkopf-Halten von Teilen in der Schiene über eine einen Nutenstein und eine Gegenmutter durchgreifende Schraube.

Sonstige bekannte Nutensteine sind rechteckig, insbesondere quadratisch ausgebildet, wobei der senkrechte Abstand der Seitenwandungen oder -flächen des Nutensteins - bei rechteckförmigem Querschnitt die geringere Abmessung der Breite des Nutengrundes - der Nut in einer Nutenschiene entspricht. Es ist daher notwendig den Nutenstein von der Stirnseite der Nutenschiene in eine Nut einzufädeln. Dies ist aufwendig und mühsam.

Der Erfindung liegt daher die Aufgabe zugrunde ein Klemm-element und eine ein solches aufweisende vorrichtung zu schaffen, mit dem die Blockierung einer Nockenschiene an frei wählbaren Positionen einer Nutenschiene in einfacher Weise möglich ist.

Erfindungsgemäß wird die genannte Aufgabe bei einem Klemmelement sowie einer Vorrichtung der eingangs genannten Art mit den kennzeichnenden Merkmalen der Ansprüche 1 bzw. 5 gelöst.

Der Blockierblock weist eine Nut zur formschlüssigen seitlichen Festlegung einer Nockenschiene auf. Ein dem Blockierblock entsprechender Bereich kann dabei auch einstückig an einer Nockenschiene ausgebildet sein. Die Abmessungen des Nutensteins können derart gewählt werden, dass er einerseits durch den Einführbereich der Nut senkrecht zur Erstreckungsrichtung derselben hindurch in den Bereich des Nutengrundes leicht eingeführt werden kann, andererseits mit Seitenwänden parallele Ausrichtungen derselben an den Seitenwänden des Nutengrundes anliegt und damit eine sichere Ausrichtung und Festlegung erlaubt.

In bevorzugter Weiterbildung ist daher vorgesehen, dass der vertikale Abstand al zweier erster paralleler Seitenflächen des Nutensteins dem der Breite a des Einführbereichs der hinterschnittenen Nut entspricht und insbesondere der Abstand zweier erster paralleler Seitenflächen des Nutensteins dem der Breite a des Einführbereichs der hinterschnittenen Nut entspricht, wobei die Abmessungen al bzw. bl in der Regel mit einem im Toleranzbereich liegenden Mindermaß gegenüber den Abmessungen a bzw. b gewählt sind.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im einzelnen erläutert sind. Dabei zeigt:
- Fig. 1: eine perspektivische Darstellung eines erfindungsgemäßen Klemmelements mit anliegender Nockenschiene;
- Fig. 2: eine Darstellung zur Einführung des Nutensteins eines Klemmelements in eine hinterschnittene Nut einer Nutenschiene;
- Fig. 3: eine Darstellung des in eine Nutenschiene eingeführten und mittels eines Nutensteins festgelegten Klemmelements und
- Fig. 4: eine Draufsicht auf das Klemmelement der Fig. 1.

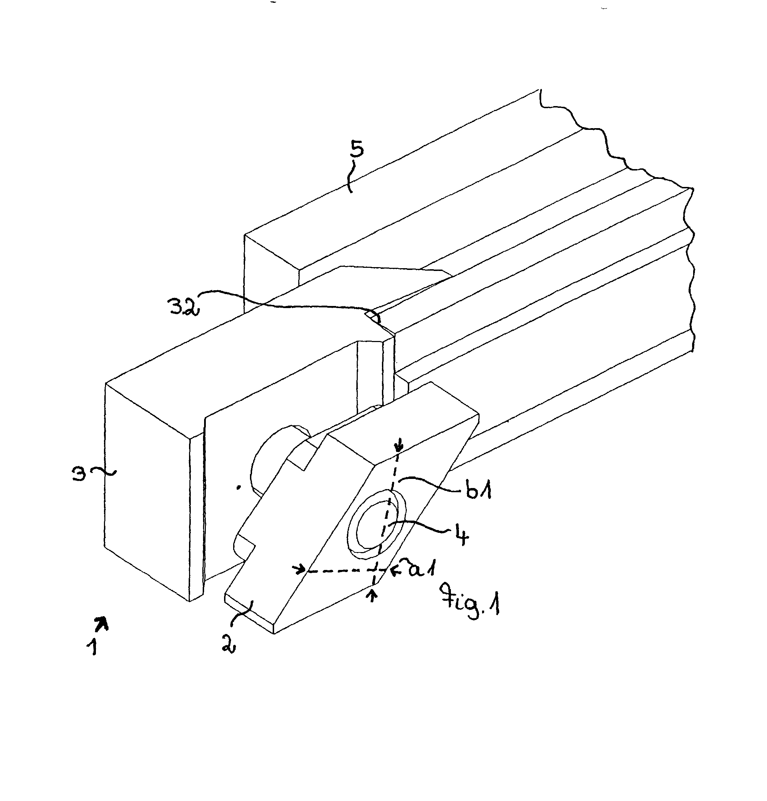

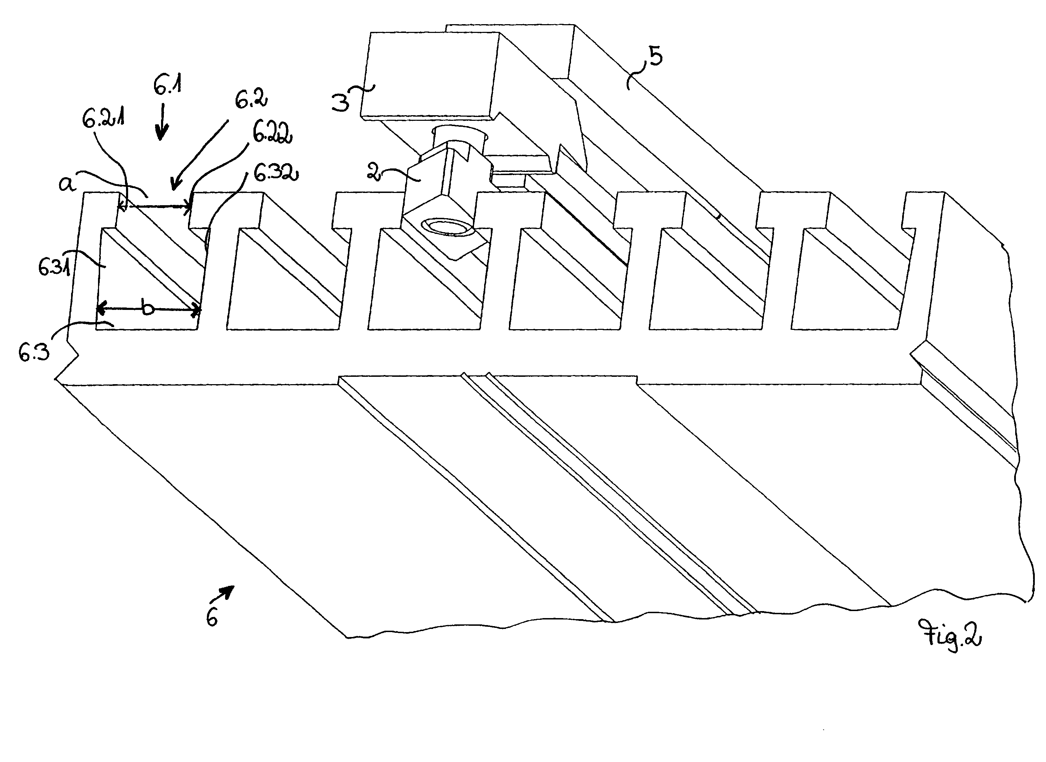

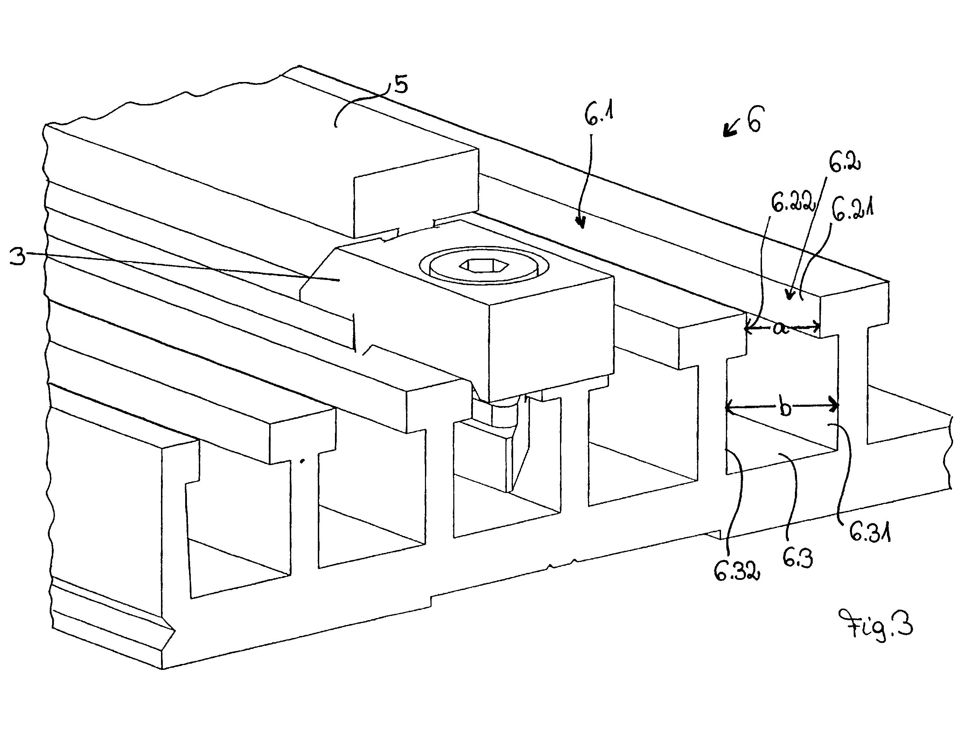

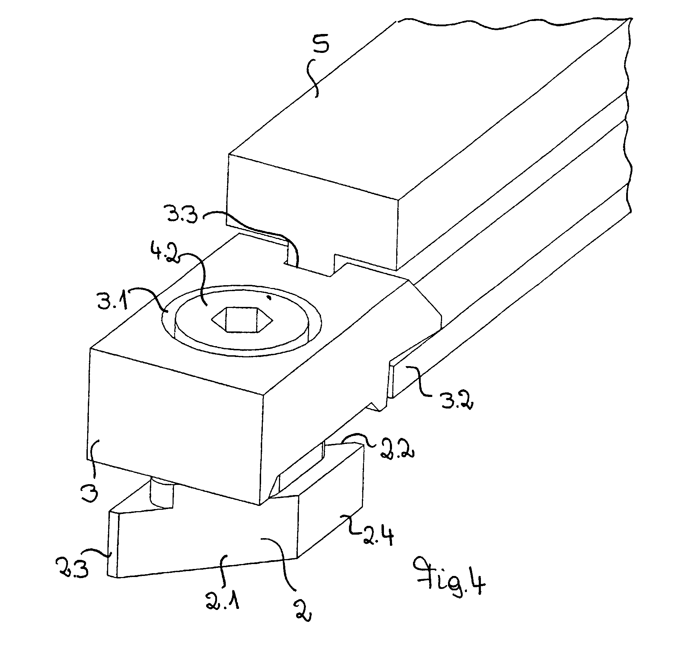

Das in der Fig. 1 dargestellte Klemmelement weist einen Blockierblock 3 und eine beide verbindende Klemmschraube 4 auf. Die Klemmschraube 4 ist, wie dies beispielsweise aus den Fig. 3 bis 5 entnehmbar ist, vorzugsweise als sogenannte Imbus-Schraube ausgebildet, also eine Schraube die in ihrem Kopf 4.1 eine sechskantförmige Betätigungsausnehmung 4.2 aufweist. Der Kopf 4.1 ist vorzugsweise in einer dem Nutenstein 2 abgewandten Vertiefung 3.1 des Blockierblocks 3 versenkt angeordnet. Der Blockierblock 3 weist eine vertikale Anschlagfläche 3.2 auf. Weiterhin ist er auf einer durch ihn zu blockierenden Nockenschiene 5 zugewandten Seite mit einer Nut 3.3 zur formschlüssigen seitlichen Festlegung der Nockenschiene 5 versehen. Der Nutenstein 2 weist in einer Ebene senkrecht zur Erstreckungsrichtung der Schraube 4 einen Parallelogramm-Querschnitt, also insgesamt Parallelogramm-Form auf. Zwei erste Seitenflächen 2.1, 2.2 des Nutensteins 2 weisen einen Abstand al auf. Die beiden zweiten parallel zueinander verlaufenden Seitenflächen 2.3, 2.4 weisen einen größeren Abstand bl auf.

Nutenschienen 6 sind mit hinterschnittenen Nuten 6.1 versehen. Die Nuten 6.1 weisen einen Einführbereich 6.2 und diesem folgend einen Nutengrund 6.3 auf. Die Breite des Einführungsbereichs 6.2 beträgt a und die Breite des Nutengrundes b, wobei die Breite b größer als a ist.

Der Abstand al der ersten Seitenflächen 2.1, 2.2 des Nutensteins 2 entspricht im wesentlichen der Breite a des Einführungsbereichs 6.2 mit einem in einem Toleranzbereich liegenden Mindermaß, so dass der Nutenstein 2 durch den Einführbereich 6.2 der Nutenschiene in die Nut 6.1 einführbar ist, wenn seine ersten Seitenflächen 2.1, 2.2 parallel zu den Begrenzungswandungen 6.21, 6.22 des Einführbereichs 6.2 der Nut 6.1 verlaufen.

Der Abstand bl der zweiten Seitenflächen 2.3, 2.4 des Nutensteins 2 entspricht im wesentlichen, d.h. gegebenenfalls ebenfalls mit einem im Toleranzbereich liegenden Mindermaß der Breite b des Nutengrundes 6.3, so dass der Nutenstein 2 im Nutengrund 6.3 in eine Position verschwenkbar ist, bei der seine zweiten Seitenflächen 2.3, 2.4 parallel zu den Seitenwänden 6.31, 6.32 des Nutengrundes 6.3 verlaufen.

Durch die genannte dargestellte Parallelogramm-Form des Nutensteines 2 ist dieser bei paralleler Ausrichtung seiner ersten Seitenflächen 2.1, 2.2 leicht senkrecht zur Erstreckungsrichtung der Nut 6.1 durch den Einführbereich 6.2 in die Nut einführbar, wie dies in Fig. 2 dargestellt ist. Sobald der Nutenstein in den Bereich des Nutengrundes 6.3 gelangt, wird die Schraube 4 gedreht, wodurch der Nutenstein aufgrund des Umstandes, dass er reibschlüssig an der Schraube 2 gehalten ist in eine Position verschwenkt wird, bei der seine zweiten Seitenflächen 2.3, 2.4 parallel zu den Seitenwänden 6.31, 6.32 des Nutengrundes 6.3 verlaufen. Bei weiterem Verschrauben der Schraube 2 wird durch die Schraubwirkung der Nutensteine nach oben angehoben und von unten gegen die Hinterschneidungen der hinterschnittenen Nut 1 gedrückt, während der Blockierblock von oben gegen die die Hinterschneidungen bildenden schienenartigen Vorsprünge gedrückt wird, wodurch das Klemmelement fest auf der Nutenschiene 6 festgeklemmt wird und damit, wie dies in den Figuren dargestellt ist, in seine Nut 3.3 eingesetzt und in seiner vertikalen Blockierwandung 3.2 anliegenden Nockenschiene diese sicher an der Nutenschiene 6 festlegt.

Die Nockenschiene 5 und der Klemmbock 3 können -wie dargestellt- zweistückig ausgebildet sein. Alternativ können sie auch einstückig ausgebildet sein.

## Patentansprüche

1. Klemmelement (1) mit einem parallelogrammartigen Nutenstein (2) zur Festlegung in einer hinterschnittenen Nut (6.1) mit einem schmaleren Einführbereich (6.2) und einem weiteren Nutengrund (6.3) **dadurch gekennzeichnet, dass** mit dem Nutenstein (2) ein Blockierblock (3) verbunden ist und dass der Blockierblock eine Anschlagfläche (3.2) für eine Nockenschiene (5) aufweist.

2. Klemmelement (1) nach Anspruch 1, **dadurch gekennzeichnet, dass** der Blockierblock (3) eine Nut (3.3) zur formschlüssigen seitlichen Festlegung einer Nockenschiene (5) aufweist.

3. Klemmelement (1) nach Anspruch 1 oder 2, **dadurch gekennzeichnet, dass** der Abstand (a1) zweier erster paralleler Seitenflächen (2.1,2.2) des Nutensteins (2) dem der Breite (a) des Einführbereichs der hinterschnittenen Nut (6.1) entspricht.

4. Klemmelement (1) nach Anspruch 1, 2 oder 3, **dadurch gekennzeichnet, dass** der Abstand (b1) zweier zweiter paralleler Seitenflächen (2.3,2.4) des Nutensteins (2) der Breite (b) des Nutengrundes (6.3) der hinterschnittenen Nut (6.1) entspricht.

5. Vorrichtung zum Festlegen von Nockenschienen (5) an einem Maschinenteil, mit einem einen parallelogrammartigen Nutenstein (2) aufweisenden Klemmelement (1) nach Anspruch 1-4 und mit hinterschnittenen Nuten (6.1) aufweisenden Nutenschienen (6), **dadurch gekennzeichnet, dass** der Blockierblock (3) eine Anschlagfläche (3.2) für eine Nockenschiene aufweist.

6. Vorrichtung nach Anspruch 5 bis 7, **dadurch gekennzeichnet, dass** der Blockierblock (3) eine Nut (3.3) zur formschlüssigen seitlichen Festlegung eine Nockenschiene (5) aufweist.

7. Vorrichtung nach Anspruch 5 oder 6, **dadurch gekennzeichnet, dass** der Abstand (a1) zweier erster paralleler Seitenflächen (2.1,2.2) des Nutensteins (2) dem der Breite (a) des Einführbereichs der hinterschnittenen Nut (6.1) entspricht.

8. Vorrichtung nach Anspruch 5, 6 und 7, **dadurch gekennzeichnet, dass** der Abstand (b1) zweier zweiter paralleler Seitenflächen (2.3,2.4) des Nutensteins (2) der Breite (b) des Nutengrundes (6.3) der hinterschnittenen Nut (6.1) entspricht.

## Claims

1. Clamping element (1) with a parallelogram-like sliding block (2) for fixing in an undercut groove (6.1) with a narrower insertion area (6.2) and a wider groove base (6.3), **characterized in that** to the sliding block (2) is connected a blocking member (3), which has a stop face (3.2) for a cam rail (5).

2. Clamping element according to claim 1, **characterized in that** the blocking member (3) has a groove (3.3) for the positive, lateral fixing of a cam rail (5).

3. Clamping element according to claim 1 or 2, **characterized in that** the spacing (a1.) of two, first, parallel side surfaces (2.1, 2.2) of the sliding block (2) corresponds to the width (a) of the insertion area of the undercut groove (6.1).

4. Clamping element (1) according to claim 1, 2 or 3, **characterized in that** the spacing (b1) of two, second, parallel side surfaces (2.3, 2.4) of the sliding block (2) corresponds to the width (b) of the groove base (6.3) of the undercut groove (6.1).

5. Device for fixing cam rails (5) on a machine part, with a clamping element (1) having a parallelogram-like sliding block (2) according to claims 1 to 4 and with grooved rails (6) having undercut grooves (6.1), **characterized in that** the blocking member (3) has a stop face (3.2) for a cam rail.

6. Device according to claim 5, **characterized in that** the blocking member (3) has a groove (3.3) for the positive lateral fixing of a cam rail (5).

7. Device according to claim 5 or 6, **characterized in that** the spacing (a1) of two first, parallel side surfaces (2.1, 2.2) of the sliding block (2) corresponds to the width (a) of the insertion area of the undercut groove (6.1).

8. Device according to claim 5, 6 and 7, **characterized in that** the spacing (b1) of two, second, parallel side surfaces (2.3, 2.4) of the sliding block (2) corresponds to the width (b) of the groove base (6.3) of the undercut groove (6.1).

## Revendications

1. Elément de fixation (1) comportant un coulisseau (2) sensiblement en forme de parallélogramme pour la fixation dans une gorge (6.1) en contre-dépouille présentant une zone d'introduction (6.2) plus étroite et un fond de gorge (6.3) plus large, **caractérisé en ce qu'**un bloc de blocage (3) est relié au coulisseau (2) et **en ce que** le bloc de blocage présente une surface de butée (3.2) pour un profilé pour excentriques (5).

2. Elément de fixation (1) selon la revendication 1, **caractérisé en ce que** le bloc de blocage (3) présente une rainure (3.3) pour la fixation latérale par ajustement de forme d'un profilé pour excentriques (5).

3. Elément de fixation (1) selon la revendication 1 ou 2, **caractérisé en ce que** la distance (al) entre deux premières faces latérales parallèles (2.1, 2.2) du coulisseau (2) correspond à la largeur (a) de la zone d'introduction de la gorge (6.1) en contre-dépouille.

4. Elément de fixation (1) selon la revendication 1, 2 ou 3, **caractérisé en ce que** la distance (bl) entre deux deuxièmes faces latérales (2.3, 2.4) du coulisseau (2) correspond à la largeur (b) du fond (6.3) de la gorge (6.1) en contre-dépouille.

5. Dispositif de fixation de profilés pour excentriques (5) sur une partie de machine, comportant un élément de fixation (1) présentant un coulisseau (2) sensiblement en forme de parallélogramme selon la revendication 1-4, et des profilés à gorges (6) présentant des gorges (6.1) en contre-dépouille, **caractérisé en ce que** le bloc de blocage (3) présente une surface de butée (3.2) pour un profilé pour excentriques.

6. Dispositif selon la revendication 5 à 7, **caractérisé en ce que** le bloc de blocage (3) présente une rainure (3.3) pour la fixation latérale à ajustement de forme d'un profilé pour excentriques (5).

7. Dispositif selon la revendication 5 ou 6, **caractérisé en ce que** la distance (al) entre deux premières faces latérales parallèles (2.1, 2.2) du coulisseau (2) correspond à la largeur (a) de la zone d'introduction de la gorge (6.1) en contre-dépouille.

8. Dispositif selon la revendication 5, 6 ou 7, **caractérisé en ce que** la distance (bl) entre deux deuxièmes faces latérales (2.3, 2.4) du coulisseau (2) correspond à la largeur (b) du fond (6.3) de la gorge (6.1) en contre-dépouille.
